# EUROPEAN PATENT SPECIFICATION

(11) **EP 2 365 589 B1**
(45) Date of publication and mention of the grant of the patent: **27.08.2014**
(21) Application number: 11001474.3
(22) Date of filing: 22.02.2011
(51) Int. Cl.: H01R 13/52, H01R 4/20, B60L 11/18, H01R 13/187, H01R 13/11

(54) **Female terminal and charging connector**
Buchsenanschlussstück und Ladestecker
Douille femelle et connecteur d'alimentation

(30) Priority: 11.03.2010 JP 2010054799
(43) Date of publication of application: 14.09.2011
(73) Proprietor: Sumitomo Wiring Systems, Ltd., Yokkaichi-city, Mie 510-8503 (JP)
(72) Inventor: Maegawa, Akihito, Yokkaichi-city Mie 510-8503 (JP)
(74) Representative: Müller-Boré & Partner Patentanwälte PartG mbB

(56) References cited:
- EP-A2- 0 665 610
- DE-A1- 19 605 206
- DE-A1- 19 650 099
- DE-A1-102007 015 696
- JP-A- 2002 075 543
- US-B1- 6 371 768

## Description

The present invention relates to a female terminal and a charging connector.

A charging connector connectable to a vehicle-side connector provided in a vehicle is, for example, known from Japanese Unexamined Patent Publication No. H07-67210. This connector internally includes female terminals connectable to bar-shaped male terminals and terminal accommodating portions internally formed with cavities for accommodating these female terminals. Each female terminal includes a contact member composed of a plurality of contact pieces which resiliently come into contact with the male terminal while holding the male terminal and a contact-member accommodating portion for accommodating this contact member inside. This contact-member accommodating portion is formed to extend forward from a main body, and an insertion hole for allowing the insertion of the male terminal is formed in a front end portion of the contact-member accommodating portion. This female terminal is similar to a louver terminal disclosed, for example, in Japanese Unexamined Patent Publication No. 2002-75543.

Since such a charging connector assumes outdoor use, a muddy water test is conducted in which the charging connector is dried after being immersed in muddy water and then repeatedly connected to and separated from a vehicle-side connector. Thus, the charging connector is required to have durability for the muddy water test.

In the above construction, a water drain hole is formed in the terminal accommodating portion and the muddy water is drained to the outside through this water drain hole. However, since no water drain hole is formed in the contact-member accommodating portion, the muddy water cannot be drained to the outside of the contact-member accommodating portion. When the muddy water is dried, mud deposits on the contact pieces of the contact member. If the female terminal is repeatedly connected and separated, plating on the contact member may be peeled off or the contact member may be scratched.

DE 196 05 206 A1 discloses an electrical terminal including an insertion port and a hollow portion into which a rod-like mating terminal can be inserted. The hollow portion contains a spring or is split and surrounded by a spring for resilient contact with the rod. A peripheral groove is formed adjacent the insertion port, and an elastic O-ring or radially split plastics ring is mounted in the groove. The ring, which may be shaped, has an inner diameter smaller than an outer diameter of a mating rod, to scrape contamination from the rod. Preferably, a muddy water discharge surface defined by a tapering surface is formed at the insertion port.

EP 0 665 610 A2 discloses a water-resistant electrical connector having a flow-down space, through which water passes, formed between the outside surface of female terminal housings and the inside of a male hood. Water which penetrates inside the male hood from the end thereof passes through a flow-down space to exit apertures. Neighboring terminals are separated by hollow partition walls. Partition walls may project from the male connector and pass between adjacent female terminal housings to improve electrical isolation.

JP 2002 075543 A discloses a shielded connector wherein, when the shielded connector is fitted to the counterpart connector, a terminal housing cylinder of the counterpart connector is inserted into the inside of a terminal housing part. When a shield shell covering the outside on the tip side of the terminal housing cylinder is inserted into the inside of a louver terminal, an elastic band part in the louver terminal receives a force toward the depth side of a contact mounting part because of sliding resistance between it and the shield shell. In the louver terminal of this invention, a ring part on the front side beyond the elastic band part is locked by means of a stopper part, so that the sliding resistance works as a force pulling the elastic band part.

DE 196 50 099 A1 discloses a connector having a first current supply plug connector part and a second current load plug connector part. The first plug connector part has a cylindrical plug housing. An inner surface of this in the rear half is covered by a circular water-tight seal which can be brought into engagement with the second plug connector part. The front half of the housing is covered by a seal holder to prevent escape of the water tight seal. A flow of electric current through the charge plug connector is possible when the current supply plug connector part and the current load plug connector part are completely coupled together. The seal holder may have a ring-shaped projection on an outer circumference surface of its front end to protect the front end of the plug housing. The projection may be made of metal or high impact resin. The plug housing may have a sloping front end.

US 6 371 768 B1 discloses an electrical connector assembly having a male and female connector. The male connector has electrical contacts in a housing for conducting AC or DC current. The female connector also includes a housing with electrical contacts to electrically couple with the male electrical contacts. The electrical contacts are coupled between a power source and a rechargeable power user, such as batteries in an electric vehicle. A mechanism to terminate power of the rechargeable power user is coupled with the system to prohibit use of the rechargeable power user during charging.

DE 10 2007 015 696 A1 discloses a socket having a flat-connecting section and a tube-like plug-in section with an opening, where the plug-in section comprises two partial sections along its length. The diameter of the partial section is smaller than that of the partial section. The partial section is arranged with the flat-connecting section. The partial section that is upstream to the plug-in direction forms the opening and comprises a control opening implemented on the pipe wall of the socket.

The present invention was developed in view of the above situation and an object thereof is to discharge muddy water to the outside of a contact-member accommodating portion and, hence, protect a contact member.

This object is solved according to the invention by the features of the independent claims. Preferred embodiments of the invention are subject of the dependent claims.

According to the invention, there is provided a charging connector connectable to a vehicle-side connector provided in a vehicle, comprising:
at least one female terminal into which a male terminal is at least partly fittable, comprising:
a contact member, wherein in the contact member, a plurality of contact pieces substantially extending in a connecting direction with the male terminal are arranged in a circumferential direction, intermediate parts of the contact pieces in an extending direction are radially inwardly curved, and the contact pieces can resiliently come into contact with the male terminal while holding the male terminal by the curved parts;
a female-side main portion; and
a contact-member accommodating portion for at least partly accommodating the contact member inside projecting forward from the female-side main portion, a forward direction being a connection direction of the charging connector with the vehicle-side connector;
   wherein:
   the contact-member accommodating portion includes a front wall constituting a front end part of the contact-member accommodating portion and a side wall formed between the front wall and the female-side main portion,
   an entrance hole for allowing the entrance of the male terminal into the contact-member accommodating portion is formed in the front wall, and
   at least one first discharge hole for allowing the inside and outside of the contact-member accommodating portion to communicate is formed in the side wall; and
   at least one terminal accommodating portion adapted to at least partly accommodate the female terminal inside and having an insertion hole for allowing the insertion of a male terminal formed at a position thereof corresponding to the entrance hole, wherein at least one second discharge hole for allowing the inside and outside of the terminal accommodating portion to communicate is formed in a peripheral wall of the terminal accommodating portion surrounding or adjacent to the first discharge hole.

According to this construction, when, for example, muddy water enters the contact-member accommodating portion, it can be discharged to the outside of the contact-member accommodating portion through the first discharge hole. Thus, it is possible to discharge muddy water or the like to the outside of the contact-member accommodating portion and, hence, protect the contact member. In this way, endurance performance that can endure a muddy water test can be obtained.

According to a further preferred embodiment of the invention, the female terminal into which a male terminal is fittable, comprises a contact member in which a plurality of contact pieces extending in a connecting direction with the male terminal are arranged in a circumferential direction, intermediate parts of the contact pieces in an extending direction are radially inwardly curved, and the contact pieces resiliently come into contact with the male terminal while holding the male terminal by the curved parts; and a terminal main body in which a contact-member accommodating portion for accommodating the contact member inside projects forward from a main portion; wherein the contact-member accommodating portion includes a front wall constituting a front end part of the contact-member accommodating portion and a side wall formed between the front wall and the main portion, an entrance hole for allowing the entrance of the male terminal into the contact-member accommodating portion is formed in the front wall, and a first discharge hole for allowing the inside and outside of the contact-member accommodating portion to communicate is formed in the side wall.

The present invention is preferably embodied to have the following constructions.

The side wall may be formed to be substantially cylindrical, and a plurality of first discharge holes may be formed in the side wall while substantially being arranged in a circumferential direction.

According to this construction, when, for example, muddy water enters the contact-member accommodating portion, it can be discharged to the outside of the contact-member accommodating portion through the plurality of first discharge holes, wherefore the muddy water can be efficiently discharged.

A female-side flange portion at least partly may be circumferentially provided on the female-side main portion so as to be bringable substantially in contact with a rear end opening edge of a cavity for at least partly accommodating the female terminal so as not to move any further forward.

The female terminal according may further comprise a wire connection portion to be connected to a wire.

The wire connection portion may comprise at least one female-side barrel portion being formed adjacent to the female-side main portion, wherein a core exposed at an end of the wire may be at least partly accommodated in the female-side barrel portion and connected thereto by crimping or folding or bending or deforming the female-side barrel portion.

A wire view window which is open outwardly may be formed to penetrate through the wire connection portion so that by viewing a core through this wire view window, it can be confirmed that the wire is inserted to a specified depth in the wire connection portion.

According to a further preferred embodiment of the invention, there is provided a charging connector connectable to a vehicle-side connector provided in a vehicle, comprising the above female terminal; and a terminal accommodating portion adapted to accommodate the female terminal inside and having an insertion hole for allowing the insertion of a male terminal formed at a position thereof corresponding to the entrance hole; wherein a second discharge hole for allowing the inside and outside of the terminal accommodating portion to communicate is formed in a peripheral wall of the terminal accommodating portion surrounding the first discharge hole.

According to this construction, for example, muddy water can be discharged to the outside of the contact-member accommodating portion, i.e. to the inside of the terminal accommodating portion through the first discharge hole and then further discharged to the outside of the terminal accommodating portion through the second discharge hole. In other words, the muddy water cannot be efficiently discharged through the first discharge hole if the muddy water stays in the terminal accommodating portion. In this respect, according to the above construction, the muddy water can be discharged from the inside to the outside of the terminal accommodating portion through the second discharge hole, wherefore the muddy water can be efficiently discharged through the first discharge hole.

A clearance may be set between the peripheral wall of the terminal accommodating portion surrounding the first discharge hole and the female terminal.

According to this construction, muddy water discharged to the clearance through the first discharge hole can be discharged to the outside through the second discharge hole since the first and second discharge holes communicate via the clearance.

According to the above, it is possible to discharge muddy water to the outside of a contact-member accommodating portion and, hence, protect a contact member.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a longitudinal section showing a state before a vehicle-side connector and a charging connector are connected in a first embodiment,
FIG. 2 is a longitudinal section showing a state where the vehicle-side connector and the charging connector are connected,
FIG. 3 is a longitudinal section enlargedly showing surroundings of a female terminal in FIG. 1,
FIG. 4 is a longitudinal section enlargedly showing surroundings of a female terminal corresponding to FIG. 3 in a second embodiment, and
FIG. 5 is a longitudinal section enlargedly showing surroundings of a female terminal corresponding to FIG. 3 in a third embodiment.

### <First Embodiment>

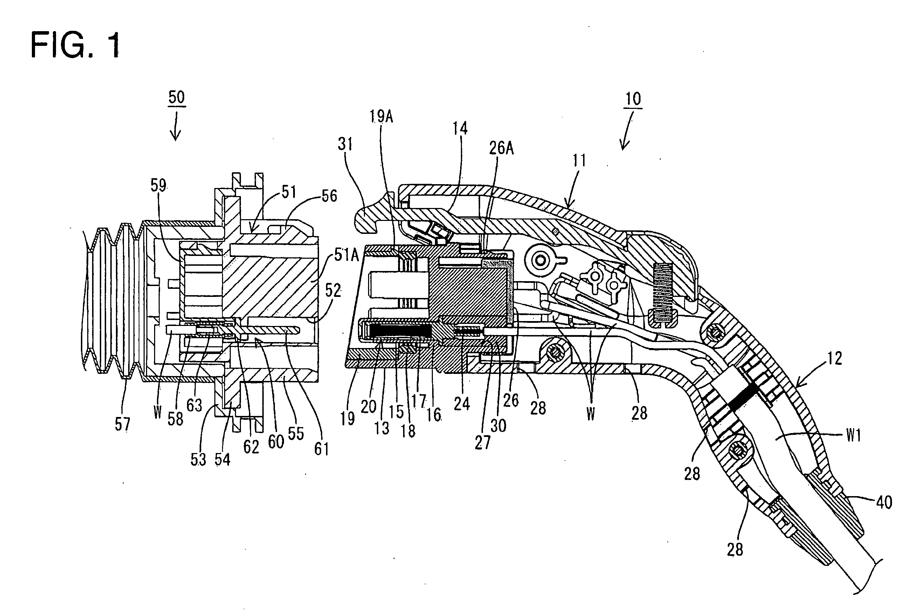

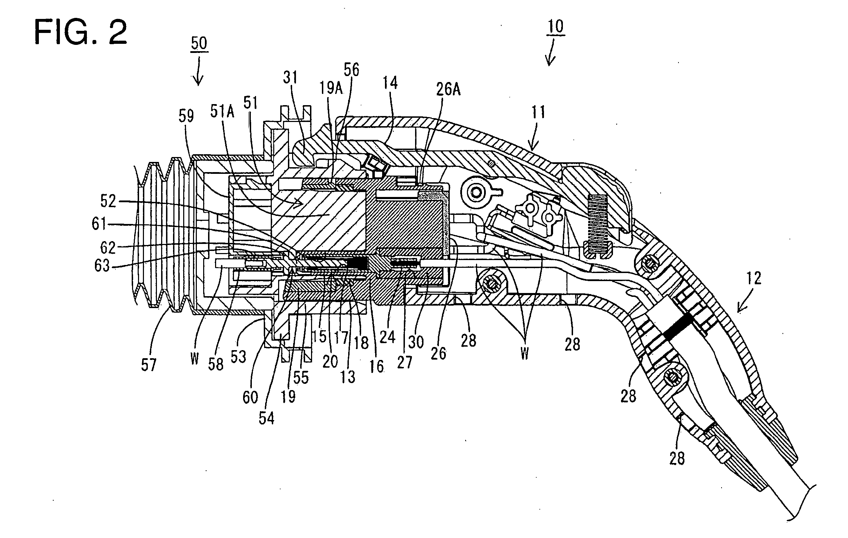

A first particular embodiment of the present invention is described with reference to FIGS. 1 to 3. A charging connector 10 of this embodiment particularly is connectable with a vehicle-side connector 50. It should be noted that in the following a front side or a forward direction is referred to a connection direction of the charging connector 10 with the vehicle-side connector 50. The charging connector 10 substantially is gun-shaped as a whole and formed with a connector main body 11 constituting or forming a front part (particularly substantially a front half) and a grip 12 extending obliquely downward from a rear portion of this connector main body 11 as shown in FIG. 1. The connector main body 11 and the grip 12 particularly are both made of synthetic resin and/or integrally or unitarily molded. A (particularly substantially cylindrical) receptacle 13 substantially projecting forward is provided on or at the front surface of the connector main body 11. Further, a lever 14 is provided on or to the connector main body 11 (particularly at least partly accommodated at an upper side of the interior of the connector main body 11, and a front or distal end portion thereof is exposed to the outside from the connector main body 11 particularly from the front edge of the upper surface of the connector main body 11.

The receptacle 13 is formed as a separate member from the connector main body 11, and to be fixed to the connector main body 11 by an unillustrated locking means. One or more, particularly a plurality of (particularly substantially cylindrical or tubular) terminal accommodating portions 15 are provided in the receptacle 13. These one or more terminal accommodating portions 15 substantially project forward from a back wall 16 of the receptacle 13. One or more cavities 17 for at least partly accommodating one or more respective female terminals 20 are formed in the terminal accommodating portions 15. A clearance 17B is set between the outer circumferential surface of the female terminal 20 at least partly accommodated in the cavity 17 and the inner wall of the terminal accommodating portion 15. This clearance 17B particularly is formed because the cavity 17 is dimensioned to be one size larger than the outer shape of the female terminal 20 in view of a variation in the finished dimensions of the cavity 17 caused particularly by molding.

The (particularly each) cavity 17 is open at (particularly the rear surface of the back wall 16 of) the receptacle 13. The cavity 17 is a space for at least partly accommodating the female terminal 20, and this space particularly is formed by the inner wall of the terminal accommodating portion 15. An insertion hole 17A, through which a male terminal 60 to be described later is at least partly insertable, is formed to penetrate through the front wall of the cavity 17. Further, at least one second discharge hole 25B is formed to penetrate through a lower side of (particularly the front end of) the inner wall of the cavity 17 or close thereto. Muddy water or the like having entered the terminal accommodating portion 15 is or may be discharged to the outside through the second discharge hole 25B.

A cylindrical rubber ring 18 (as a preferred resilient ring) is mounted along the inner circumferential surface of the receptacle 13 in the receptacle 13, and a holder 19 for retaining the rubber ring 18 is mounted before the rubber ring 18. The holder 19 particularly has the substantially same cylindrical shape as the rubber ring 18 and includes at least one locking portion 19A engageable with an inner side of the receptacle 13. The holder 19 is mounted substantially along the inner circumferential surface of the receptacle 13 by this locking portion 19A.

A mounting portion for the holder 19 on the inner circumferential surface of the receptacle 13 particularly has a larger diameter than the back side of the rubber ring 18. By mounting the holder 19, the inner circumferential surface of the holder 19 and the inner circumferential surface of the receptacle 13 substantially behind the rubber ring 18 are substantially aligned to be substantially flush. One or more lip portions of the rubber ring 18 project radially inwardly of the inner circumferential surface of the holder 19. On the other hand, the vehicle-side connector 50 includes a vehicle-side housing 51 connectable to the charging connector 10. The vehicle-side housing 51 is made e.g. of synthetic resin and includes a housing main body 51A at least partly fittable or insertable into the receptacle 13. Thus, when the housing main body 51 A is or may be at least partly fitted into the receptacle 13, the outer circumferential surface thereof comes into close contact with (particularly the lip portions of) the rubber ring 18, thereby providing waterproofing between the two connectors 10 and 50.

One or more vehicle-side cavities 52 for at least partly accommodating the one or more respective male terminals 60 are formed in the housing main body 51 A. The vehicle-side housing 51 is to be mounted in a mounting opening portion 53 formed in a vehicle body. A mounting plate 54 is formed to project from the outer periphery of the vehicle-side housing 51, and the vehicle-side housing 51 is to be mounted and fixed to the mounting opening portion 53 particularly by placing this mounting plate 54 along the opening edge of the mounting opening portion 53 and fixing (particularly bolting) it.

A fitting tube portion 55 is circumferentially provided around or on (particularly the outer circumferential surface of) the housing main body 51 A. This fitting tube portion 55 substantially projects forward from the mounting plate 54, so that the receptacle 13 is at least partly fittable between the housing main body 51A and the fitting tube portion 55. A lock projection 56 is provided on (particularly the upper surface of) the fitting tube portion 55. This lock projection 56 is engageable in a connecting direction with a lock portion 31 provided at (particularly a front end portion of) the lever 14. Accordingly, when the two connectors 10, 50 are connected, the lock portion 31 is engaged with the lock projection 56, whereby the two connectors 10, 50 are held in a connected state. Note that a bellows-like grommet 57 substantially extending backward is to be mounted on (particularly a rear part of) the mounting opening portion 53.

Each vehicle-side terminal 60 has a (particularly substantially bar-shaped) male-side main portion 61, and a male-side flange portion 62 substantially is so circumferentially provided as to project from at least part of the outer circumferential surface of this male-side main portion 61. The male-side flange portion 62 is to be substantially in contact with the rear wall of the vehicle-side cavity 52 particularly substantially from behind, and the male-side main portion 61 is to be at least partly accommodated into the vehicle-side cavity 52 through this rear wall. A wire connection portion, particularly comprising a (particularly substantially cylindrical) male-side barrel portion 63, is formed at a rear end portion of the male-side main portion 61, and a core of a wire W is to be connected with the wire connection portion particularly by being placed in this male-side barrel portion 63 and fixed by crimping or folding or bending or deforming. Further, a heat shrinkable tube 58 is so mounted as to at least partly cover a crimping part of the male-side barrel portion 63. The crimping part of the male-side barrel portion 63 is protected from water by this heat shrinkable tube 58. A vehicle-side retainer 59 for preventing the male terminals 60 from coming out backward by being engaged with the male-side flange portions 62 of the male terminals 60 from behind is mounted in a rear part of the vehicle-side housing 51.

One or ore wires W substantially extend backward from the female terminals 20 and are drawn out to the outside through the interiors of the connector main body 11 and the grip 12. One or more, particularly a plurality of wires W are arranged in correspondence with one or more, particularly a plurality of respective female terminals 20, and these wires W are bundled into one cable W1 by being covered by an outer sheath in the grip 12. The cable W1 particularly is fixed by a cable grip ring (not shown) or the like in the grip 12 and/or (particularly further) fixed by a bush 40 at or near (particularly a rear end portion of) the grip 12.

Since the bush 40 is held substantially in close contact with the inner circumferential surface of the rear end opening of the grip 12 and the outer circumferential surface of the cable W1, water is prevented from entering the interior of the grip 12 through the rear end of the grip 12. Since one or more, particularly a plurality of water drain holes 28 are formed in or near the lower surfaces of the connector main body 11 and the grip 12, water can be allowed to escape to the outside through these water drain holes 28 even if it enters the interiors of the connector main body 11 and the grip 12.

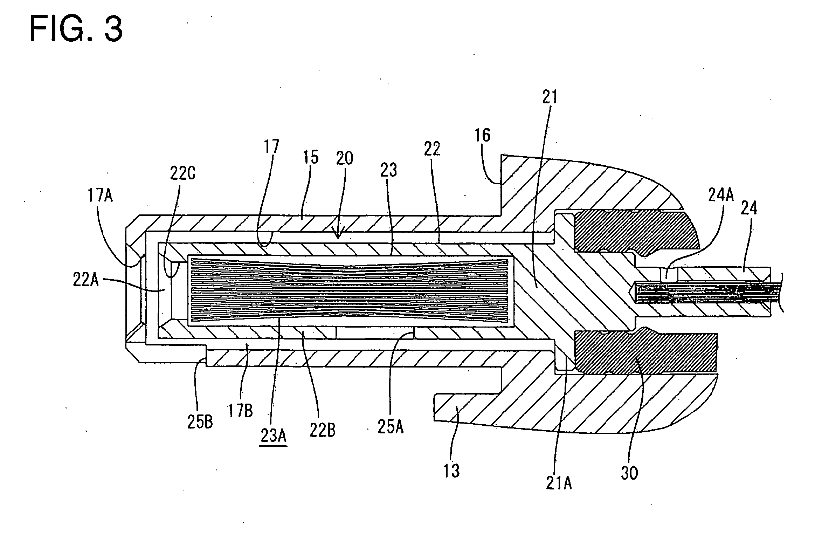

Next, a surrounding structure of the female terminal 20 of the charging connector 10 is described with reference to FIG. 3. The female terminal 20 includes a (particularly, substantially cylindrical or tubular) female-side main portion 21, and a (particularly substantially cylindrical or tubular) contact-member accommodating portion 22 substantially extends forward from this female-side main portion 21. A contact member 23 is at least partly accommodated in the contact-member accommodating portion 22. This contact member 23 particularly is composed of a plurality of contact pieces 23A. The contact member 23 of this type is called a louver terminal or the like in some cases.

Specifically, the contact member 23 is such that the plurality of contact pieces 23A extending forward from the female-side main portion 21 are arranged in a circumferential direction about an axial center of the female-side main portion 21 and central parts of these contact pieces 23A in forward and backward directions are curved radially inwardly. With the male terminal 60 fitted in the female terminal 20, the male terminal 60 is held by the plurality of contact pieces 23A and curved parts are resiliently held in contact with the male terminal 60, whereby the female terminal 20 and the male terminal 60 are electrically conductively connected.

Further, a female-side flange portion 21 A at least partly is circumferentially provided on the outer circumferential surface of the female-side main portion 21. This female-side flange portion 21 A particularly is substantially in contact with the rear end opening edge of the cavity 17. Thus, the female terminal 20 is to be so at least partly accommodated in the cavity 17 as not to move any further forward. On the other hand, one or more rubber plugs 30 are at least partly accommodated behind the female-side flange portions 21 A, and a back retainer 26 for retaining the rubber plugs 30 particularly is to be provided behind the rubber plugs 30.

The rubber plugs 30 are at least partly accommodated in rubber-plug accommodating portions 27 arranged behind and/or coaxially with the terminal accommodating portions 15. The back retainer 26 includes locking pieces 26A engageable with projections formed on the upper surfaces of the rubber-plug accommodating portions 27. A backward movement of the back retainer 26 and also backward movements of the rubber plugs 30 and the female terminals 20 are prevented by these locking pieces 26A.

A wire connection portion, particularly comprising a (particularly substantially cylindrical) female-side barrel portion 24 with an open rear end, is formed behind or adjacent to the female-side main portion 21. A core exposed at an end of a wire W is to be connected with the wire connection portion particularly by being at least partly accommodated in the female-side barrel portion 24. By crimping or folding or bending or deforming the female-side barrel portion 24, the core of the wire W is electrically conductively connected to the female-side barrel portion 24. Further, a wire view window 24A which is open outwardly or upward is formed to penetrate through (particularly an upper part of) the female-side barrel portion 24. By seeing the core through this wire view window 24A, it can be confirmed that the wire W is inserted to a specified (predetermined or predeterminable) depth in the female-side barrel portion 24.

The contact-member accommodating portion 22 includes a front wall 22A forming a front end part of the contact-member accommodating portion 22 and/or a side wall 22B formed between the front wall 22A and the female-side main portion 21. An entrance hole 22C for allowing the at least partial entrance of the male terminal 60 into the contact-member accommodating portion 22 is formed in the front wall 22A. This entrance hole 22C particularly is arranged substantially coaxially with the insertion hole 17A formed in the front wall of the cavity 17 and/or particularly has an inner diameter somewhat larger than that of the insertion hole 17A. Thus, the male terminal 60 is or can be at least partly inserted into the contact-member accommodating portion 22 through the insertion hole 17A and the entrance hole 22C.

The side wall 22B of the contact-member accommodating portion 22 particularly is formed to be substantially cylindrical and/or extends in forward and backward directions while forming a clearance 17B between the inner wall of the terminal accommodating portion 15 and itself. One or more, particularly a plurality of first discharge holes 25A are formed to penetrate through the side wall 22B. In this embodiment, three first discharge holes 25A are arranged in a circumferential direction, so that muddy water or the like is or can be discharged to the clearance 17B through these one or more first discharge holes 25A.

Since the second discharge hole 25B of the terminal accommodating portion 15 is formed in a peripheral wall surrounding the first discharge holes 25A of the contact-member accommodating portion 22, muddy water or the like discharged from the inside of the contact-member accommodating portion 22 to the clearance 17B through the first discharge holes 25A is or can be discharged to the outside through the second discharge hole 25B of the terminal accommodating portion 15. In other words, the first discharge holes 25A and the second discharge hole 25B communicate with each other via the clearance 17B. Thus, it can be avoided that muddy water or the like stays in the terminal accommodating portion 15 and muddy water or the like having entered the inside of the contact-member accommodating portion 22 can be efficiently discharged to the outside of the terminal accommodating portion 15.

Next, functions of this embodiment constructed as described above are described. First, when the two connectors 10, 50 are connected, the receptacle 13 at least partly enters between the housing main body 51 A and the fitting tube portion 55 and the one or more terminal accommodating portions 15 at least partly enter the vehicle-side cavities 52. Simultaneously with this, the one or more male terminals 60 are at least partly inserted into the respective contact-member accommodating portion(s) 22 through the insertion hole(s) 17A of the terminal accommodating portion(s) 15 and the entrance hole(s) 22C of the contact-member accommodating portion(s) 22. Thereafter, when the two connectors 10, 50 reach a connected state, the one or more male terminals 60 are resiliently held by the one or more respective contact pieces 23A of the contact members 23, whereby the terminals 20, 60 are electrically conductively connected. At this time, the two connectors 10, 50 particularly are locked in the connected state since the lock portion 31 is engaged with the lock projection 56 in the connecting direction.

During a connecting operation of the two connectors 10, 50, a foreign matter such as mud is removed by the plurality of contact pieces 23A if the foreign matter deposits on the surfaces of the male terminals 60. Since the two connectors 10, 50 are often connected outdoors, muddy water or the like is likely to enter the female terminals 20. If muddy water or the like enters the contact-member accommodating portion 22, it is or may be discharged to the clearance 17B through the plurality of first discharge holes 25A and the muddy water or the like having discharged to this clearance 17B is discharged to the outside of the terminal accommodating portion 15 through the second discharge hole(s) 25B.

Next, upon separating the two connectors 10, 50, a rear end portion of the lever 14 is pushed down or operated to lift up or displace the lock portion 31, thereby disengaging the lock portion 31 from the lock projection 56. By pulling the two connectors 10, 50 apart in this state, the male terminals 60 are withdrawn from the contact-member accommodating portions 22 and the two connectors 10, 50 are separated. Then, by releasing the rear end portion of the lever 14, the lever 14 returns to its horizontal posture by a spring force of a coil spring.

As described above, in this embodiment, the one or more first discharge holes 25A are formed in the side wall 22B of the contact-member accommodating portion 22 and muddy water or the like is discharged to the clearance 17B through these first discharge holes 25A, wherefore durability performance that can endure a muddy water test can be obtained. Further, since muddy water or the like discharged to the clearance 17B is or can be discharged to the outside of the terminal accommodating portion 15 thought the second discharge hole(s) 25B, it becomes easier to discharge the muddy water or the like from the inside of the contact-member accommodating portion 22. Further, since the plurality of first discharge holes 25A are formed in the side wall 22B of the contact-member accommodating portion 22, it becomes even easier to discharge the muddy water or the like.

Accordingly, to appropriately discharge muddy water to the outside of a contact-member accommodating portion and, hence, protect a contact member, a female terminal 20 is provided into which a male terminal 60 is at least partly fittable or insertable. The female terminal 20 is provided with a contact member 23 particularly in which a plurality of contact pieces 23A substantially extending in a connecting direction with the male terminal 60 are arranged in a circumferential direction, intermediate parts of the contact pieces 23A in an extending direction are radially inwardly curved, and the contact pieces 23 resiliently come into contact with the male terminal 60 while holding the male terminal 60 by the curved parts, and a terminal main body in which a contact-member accommodating portion 22 for at least partly accommodating the contact member 23 inside projects forward from a female-side main portion 21. The contact-member accommodating portion 22 includes a front wall 22A particularly constituting a front end part of the contact-member accommodating portion 22 and a side wall 22B formed between the front wall 22A and the female-side main portion 21. An entrance hole 22C for allowing the at least partial entrance of the male terminal 60 into the contact-member accommodating portion 22 is formed in the front wall 22A, and at least one first discharge hole 25A for allowing the inside and outside of the contact-member accommodating portion 22 to communicate is formed in the side wall 22B.

### <Second Embodiment>

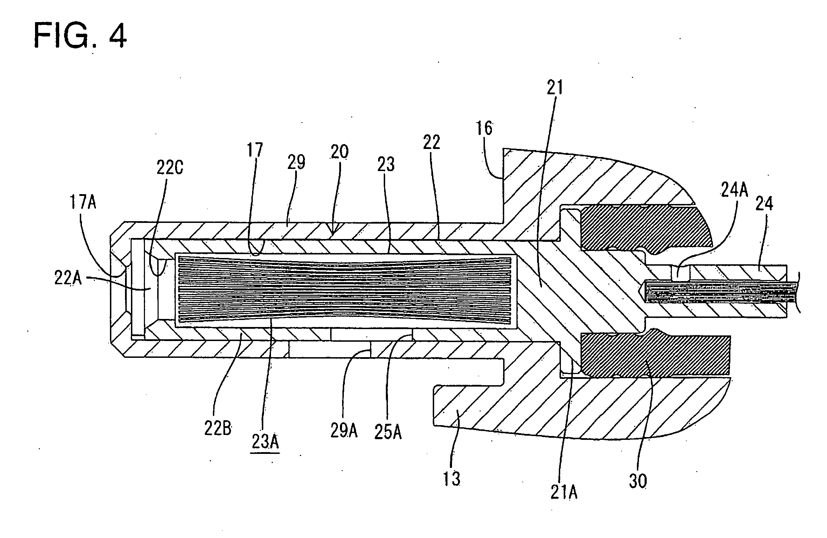

Next, a second particular embodiment of the present invention is described with reference to FIG. 4. This embodiment is obtained by partly changing the construction of the terminal accommodating portions 15 of the first embodiment and the other common constructions, functions and effects thereof are not described to avoid repetitive description. Thus, the similar or substantially same constructions as in the first embodiment are identified by the same reference numerals. Each terminal accommodating portion 29 of this embodiment is constructed such that no clearance is set between the inner wall of the terminal accommodating portion 29 and the outer circumferential surface of a female terminal 20 as shown in FIG. 4. Such a construction could be realized when the terminal accommodating portion 29 is formed to be smaller than specified due to a dimensional variation at the time of molding. However, even in such a construction, at least one second discharge hole 29A formed in or near a lower part of the terminal accommodating portion 29 and one or more first discharge holes 25A communicate by being partly overlapped. Thus, muddy water or the like having entered a contact-member accommodating portion 22 can be discharged to the outside even if there is no clearance.

### <Third Embodiment>

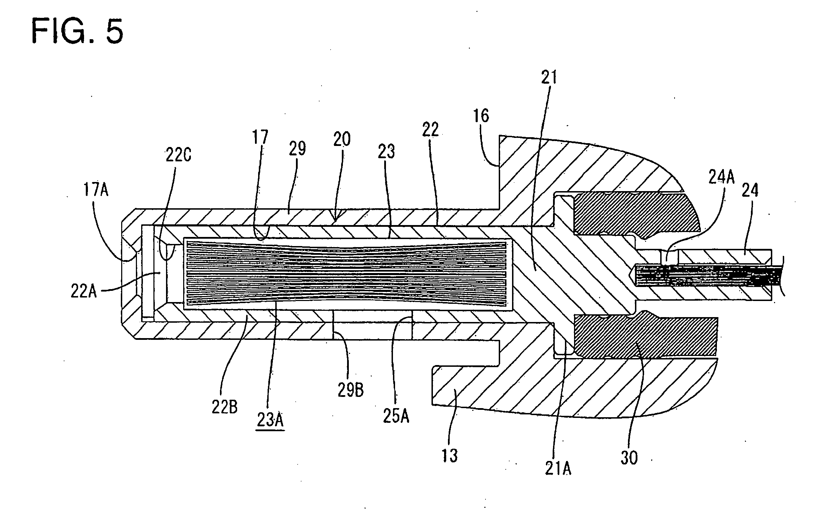

Next, a third embodiment of the present invention is described with reference to FIG. 5. Similar to the second embodiment, this embodiment is obtained by partly changing the construction of the terminal accommodating portions 15 of the first embodiment, the other common constructions, functions and effects thereof are not described to avoid repetitive description and the similar or substantially same constructions as in the first embodiment are identified by the same reference numerals. Each terminal accommodating portion 29 of this embodiment is constructed such that no clearance is set between the inner wall of the terminal accommodating portion 29 and the outer circumferential surface of a female terminal 20 as shown in FIG. 5. Further, at least one second discharge hole 29B formed in or near a lower part of the terminal accommodating portion 29 is formed to have the substantially same diameter as and to be coaxial with first discharge holes 25A. Thus, an opening area where the first and second discharge holes 29A, 29B communicate can be widened and it becomes easier to discharge muddy water or the like having entered a contact-member accommodating portion 22 to the outside.

### <Other Embodiments>

The present invention is not limited to the above described and illustrated embodiments. For example, the following embodiments are also included in the technical scope of the present invention.
(1) Although the bar-shaped male terminals 60 are illustrated in the above embodiments, male terminals in the form of flat plates may be employed according to the present invention.
(2) Although the contact-member accommodating portion 22 formed with the plurality of first discharge holes 25A is illustrated in the above embodiments, the contact-member accommodating portion may be formed with one first discharge hole according to the present invention.
(3) Although no clearance is formed in the second and third embodiments, constructions formed with a clearance are also included according to the present invention.

### LIST OF REFERENCE NUMERALS

10 ... charging connector
15 ... terminal accommodating portion
17A ... insertion hole
17B ... clearance
20 ... female terminal
21 ... female-side main portion (terminal main body)
22 ... contact-member accommodating portion
22A ... front wall
22B ... side wall
22C ... entrance hole
23 ... contact member
23A ... contact piece
25A ... first discharge hole
25B ... second discharge hole
29 ... terminal accommodating portion
29A ... second discharge hole
29B ... second discharge hole
50 ... vehicle-side connector

## Claims

1. A charging connector (10) connectable to a vehicle-side connector (50) provided in a vehicle, comprising:
at least one female terminal (20) into which a male terminal (60) is at least partly fittable, comprising:
a contact member (23), wherein in the contact member (23), a plurality of contact pieces (23A) substantially extending in a connecting direction with the male terminal (60) are arranged in a circumferential direction, intermediate parts of the contact pieces (23A) in an extending direction are radially inwardly curved, and the contact pieces (23A) can resiliently come into contact with the male terminal (60) while holding the male terminal (60) by the curved parts;
a female-side main portion (21); and
a contact-member accommodating portion (22) for at least partly accommodating the contact member (23) inside projecting forward from the female-side main portion (21), a forward direction being a connection direction of the charging connector (10) with the vehicle-side connector (50);
wherein:
the contact-member accommodating portion (22) includes a front wall (22A) constituting a front end part of the contact-member accommodating portion (22) and a side wall (22B) formed between the front wall (22A) and the female-side main portion (21),
an entrance hole (22C) for allowing the entrance of the male terminal (60) into the contact-member accommodating portion (22) is formed in the front wall (22A), and
at least one first discharge hole (25A) for allowing the inside and outside of the contact-member accommodating portion (22) to communicate is formed in the side wall (22B); the charging connector being **characterised in that** it further comprises
at least one terminal accommodating portion (15, 29) adapted to at least partly accommodate the female terminal (20) inside and having an insertion hole (17A) for allowing the insertion of a male terminal (60) formed at a position thereof corresponding to the entrance hole (22C), wherein at least one second discharge hole (25B; 29A; 29B) for allowing the inside and outside of the terminal accommodating portion (15, 29) to communicate is formed in a peripheral wall of the terminal accommodating portion (15, 29) surrounding or adjacent to the first discharge hole (25A).

2. A charging connector (10) according to claim 1, wherein:
the side wall (22B) is formed to be substantially cylindrical, and
a plurality of first discharge holes (25A) are formed in the side wall (22B) while being arranged in a circumferential direction.

3. A charging connector (10) according to claim 1 or 2, wherein a female-side flange portion (21 A) at least partly is circumferentially provided on the female-side main portion (21) so as to be bringable substantially in contact with a rear end opening edge of a cavity (17) for at least partly accommodating the female terminal (20) so as not to move any further forward.

4. A charging connector (10) according to any one of the preceding claims, further comprising a wire connection portion (24) to be connected to a wire (W).

5. A charging connector (10) according to claim 4, wherein the wire connection portion (24) comprises at least one female-side barrel portion (24) being formed adjacent to the female-side main portion (21), wherein a core exposed at an end of the wire (W) is to be at least partly accommodated in the female-side barrel portion (24) and connected thereto by crimping or folding or bending or deforming the female-side barrel portion (24).

6. A charging connector (10) according to claim 4 or 5, wherein a wire view window (24A) which is open outwardly is formed to penetrate through the wire connection portion so that by viewing a core through this wire view window (24A), it can be confirmed that the wire (W) is inserted to a specified depth in the wire connection portion (24).

7. A charging connector (10) according to any one of the preceding claims, wherein a clearance (17B) is set between the peripheral wall of the terminal accommodating portion (15, 29) surrounding or adjacent the first discharge hole (25A) and the female terminal (20).

8. A charging connector (10) according to any one of the preceding claims, wherein the at least one second discharge hole (29A) formed in or near a lower part of the terminal accommodating portion (29) and the one or more first discharge holes (25A) communicate by being partly overlapped.

9. A charging connector (10) according to any one of the preceding claims, wherein the at least one second discharge hole (29B) formed in or near a lower part of the terminal accommodating portion (29) is formed to have the substantially same diameter as and to be coaxial with one or more first discharge holes (25A).

## Patentansprüche

1. Ladeverbinder (10), der mit einem fahrzeugseitigen Verbinder (50) verbindbar ist, der in einem Fahrzeug bereitgestellt ist, umfassend:
zumindest einen Mutter- bzw. Buchsenanschluss (20), in den ein Vater- bzw. Steckeranschluss (60) zumindest teilweise einpassbar ist, umfassend:
ein Kontaktglied (23), wobei in bzw. bei dem Kontaktglied (23) eine Mehrzahl von Kontaktstücken (23A), die sich im Wesentlichen in einer Verbindungsrichtung mit dem Vater- bzw. Steckeranschluss (60) erstrecken, in einer Umfangsrichtung angeordnet sind, Zwischenteile der Kontaktstücke (23A) in einer Erstreckungsrichtung radial einwärts gekrümmt sind, und die Kontaktstücke (23A) rückstellfähig mit dem Vater- bzw. Steckeranschluss (60) in Kontakt kommen können, während sie den Vater- bzw. Steckeranschluss (60) durch die gekrümmten Teile halten;
einen mutter- bzw. buchsenseitigen Hauptabschnitt (21); und
einen Kontaktgliedaufnahmeabschnitt (22) zum zumindest teilweisen Aufnehmen des Kontaktglieds (23) im Inneren, und zwar vorspringend von dem mutter- bzw. buchsenseitigen Hauptabschnitt (21), wobei eine Vorwärtsrichtung eine Verbindungsrichtung des Ladeverbinders (10) mit dem fahrzeugseitigen Verbinder (50) ist;
wobei:
der Kontaktgliedaufnahmeabschnitt (22) eine Vorderwand (22A), die einen vorderen Endteil des Kontaktgliedaufnahmeabschnitts (22) darstellt, und eine Seitenwand (22B) enthält, die zwischen der Vorderwand (22A) und dem mutter- bzw. buchsenseitigen Hauptabschnitt (21) gebildet ist,
ein Eingangsloch (22C) zum Erlauben des Eintritts des Vater- bzw. Stekkeranschlusses (60) in den Kontaktgliedaufnahmeabschnitt (22) in der Vorderwand (22A) gebildet ist, und
zumindest ein erstes Austrittsloch (25A) zum Erlauben, dass die Innenseite und die Außenseite des Kontaktgliedaufnahmeabschnitts (22) kommunizieren, in der Seitenwand (22B) gebildet ist;
wobei der Ladeverbinder **dadurch gekennzeichnet ist, dass** er ferner umfasst
zumindest einen Anschlussaufnahmeabschnitt (15, 29), der angepasst ist, den Mutter- bzw. Buchsenanschluss (20) zumindest teilweise im Inneren aufzunehmen, und ein Einsetzloch (17A) zum Erlauben des Einsetzens eines Vater- bzw. Steckeranschlusses (60) aufweist, das ein Position davon gebildet ist, die dem Eingangsloch (22C) entspricht bzw. mit diesem korrespondiert, wobei zumindest ein zweites Austrittsloch (25B; 29A; 29B) zum Erlauben, dass die Innenseite und die Außenseite des Anschlussaufnahmeabschnitts (15, 29) kommunizieren, in einer peripheren Wand des Anschlussaufnahmeabschnitts (15, 29) gebildet ist, die bzw. der das erste Austrittsloch (25A) umgibt oder angrenzend bzw. benachbart dazu ist.

2. Ladeverbinder (10) nach Anspruch 1, wobei:
die Seitenwand (22B) so gebildet ist, dass sie im Wesentlichen zylindrisch ist, und
eine Mehrzahl erster Austrittslöcher (25A) in der Seitenwand (22B) gebildet ist, während sie in einer Umfangsrichtung angeordnet sind.

3. Ladeverbinder (10) nach Anspruch 1 oder 2, wobei ein mutter- bzw. buchsenseitiger Flanschabschnitt (21A) zumindest teilweise umfangsmäßig an dem buchsenseitigen Hauptabschnitt (21) bereitgestellt ist, um im Wesentlichen mit einer Hinterendöffnungskante bzw. -rand eines Hohlraums (17) in Kontakt bringbar zu sein, um den Buchsenanschluss (20) zumindest teilweise aufzunehmen, damit er sich nicht weiter nach vorne bewegt.

4. Ladeverbinder (10) nach einem der vorhergehenden Ansprüche, ferner umfassend einen Drahtverbindungsabschnitt (24), der mit einem Draht (W) zu verbinden ist.

5. Ladeverbinder (10) nach Anspruch 4, wobei der Drahtverbindungsabschnitt (24) zumindest einen mutter- bzw. buchsenseitigen Hülsenabschnitt (24) umfasst, der angrenzend an bzw. benachbart zu dem buchsenseitigen Hauptabschnitt (21) gebildet ist, wobei ein Kern, der an einem Ende des Drahts (W) freiliegt, zumindest teilweise in dem buchsenseitigen Hülsenabschnitt (24) aufzunehmen ist und mit diesem durch Crimpen oder Falten bzw. Klappen oder Biegen oder Verformen des buchsenseitigen Hülsenabschnitts (24) zu verbinden ist.

6. Ladeverbinder (10) nach Anspruch 4 oder 5, wobei ein Drahtsichtfenster (24A), das nach außen offen ist, so gebildet ist, dass es durch den Drahtverbindungsabschnitt penetriert, so dass durch Betrachten eines Kerns durch dieses Drahtsichtfenster (24A) bestätigt werden kann, dass der Draht (W) auf eine spezifizierte Tiefe in den Drahtverbindungsabschnitt (24) eingesetzt ist.

7. Ladeverbinder (10) nach einem der vorhergehenden Ansprüche, wobei ein Zwischenraum (17B) zwischen der peripheren Wand des Anschlussaufnahmeabschnitts (15, 29), die bzw. der das erste Austrittsloch (25A) umgibt oder angrenzend dazu ist, und dem Buchsenanschluss (20) festgelegt ist.

8. Ladeverbinder (10) nach einem der vorhergehenden Ansprüche, wobei das zumindest eine zweite Austrittsloch (29A), das in einem oder nahe eines unteren Teils des Anschlussaufnahmeabschnitts (29) gebildet ist, und das eine oder die mehreren ersten Austrittslöcher (25A) kommunizieren, indem sie teilweise überlappt sind.

9. Ladeverbinder (10) nach einem der vorhergehenden Ansprüche, wobei das zumindest eine zweite Austrittsloch (29B), das in einem oder nahe eines unteren Teils des Anschlussaufnahmeabschnitts (29) gebildet ist, so gebildet ist, dass es im Wesentlichen den gleichen Durchmesser wie das eine oder die mehreren ersten Austrittslöcher (25A) aufweist und koaxial dazu ist.

## Revendications

1. Connecteur de chargement (10) pouvant être connecté à un connecteur côté véhicule (50) prévu dans un véhicule, comprenant :
au moins une borne femelle (20) dans laquelle une borne mâle (60) peut au moins partiellement s'ajuster, comprenant :
un élément de contact (23), dans lequel une pluralité de pièces de contact (23A) s'étendant essentiellement dans une direction de connexion avec la borne mâle (60) est agencée dans une direction circonférentielle dans l'élément de contact (23), des parties intermédiaires des pièces de contact (23A) dans une direction d'extension sont courbées radialement vers l'intérieur et les pièces de contact (23A) peuvent venir en contact de manière élastique avec la borne mâle (60) tout en maintenant la borne mâle (60) par les parties courbées ;
une portion principale côté femelle (21) ; et
une portion de logement d'élément de contact (22) pour loger au moins partiellement l'élément de contact (23) à l'intérieur, faisant saillie vers l'avant depuis la portion principale côté femelle (21), une direction vers l'avant étant une direction de connexion du connecteur de chargement (10) avec le connecteur côté véhicule (50) ;
dans lequel :
la portion de logement d'élément de contact (22) inclut une paroi avant (22A) constituant une partie d'extrémité avant de la portion de logement d'élément de contact (22) et une paroi latérale (22B) formée entre la paroi avant (22A) et la portion principale côté femelle (21),
un orifice d'entrée (22C) pour permettre l'entrée de la borne mâle (60) dans la portion de logement d'élément de contact (22) est formé dans la paroi avant (22A), et
au moins un premier orifice d'évacuation (25A) pour permettre à l'intérieur et l'extérieur de la portion de logement d'élément de contact (22) de communiquer est formé dans la paroi latérale (22B) ; le connecteur de chargement étant **caractérisé en ce qu'**il comprend en outre
au moins une portion de logement de borne (15, 29) adaptée à loger au moins partiellement la borne femelle (20) à l'intérieur et ayant un orifice d'insertion (17A) pour permettre l'insertion d'une borne mâle (60) formée en une position de celui-ci correspondant à l'orifice d'entrée (22C), dans lequel au moins un second orifice d'évacuation (25B ; 29A ; 29B) pour permettre à l'intérieur et l'extérieur de la portion de logement de borne (15, 29) de communiquer est formé dans une paroi périphérique de la portion de logement de borne (15, 29) entourant ou adjacente au premier orifice d'évacuation (25A).

2. Connecteur de chargement (10) selon la revendication 1, dans lequel :
la paroi latérale (22B) est formée pour être essentiellement cylindrique et
une pluralité de premiers orifices d'évacuation (25A) est formée dans la paroi latérale (22B) tout en étant agencée dans une direction circonférentielle.

3. Connecteur de chargement (10) selon la revendication 1 ou 2, dans lequel une portion de bride côté femelle (21A) est prévue au moins partiellement de manière circonférentielle sur la portion principale côté femelle (21) de manière à pouvoir être amenée essentiellement en contact avec un bord d'ouverture d'extrémité arrière d'une cavité (17) pour loger au moins partiellement la borne femelle (20) de manière à ne pas bouger davantage vers l'avant.

4. Connecteur de chargement (10) selon l'une quelconque des revendications précédentes, comprenant en outre une portion de connexion de fil (24) devant être connectée à un fil (W).

5. Connecteur de chargement (10) selon la revendication 4, dans lequel la portion de connexion de fil (24) comprend au moins une portion de cylindre côté femelle (24) qui est formée de manière adjacente à la portion principale côté femelle (21), dans lequel un noyau exposé à une extrémité du fil (W) doit être au moins partiellement logé dans la portion de cylindre côté femelle (24) et connecté à celle-ci par sertissage ou pliage ou cintrage ou déformation de la portion de cylindre côté femelle (24).

6. Connecteur de chargement (10) selon la revendication 4 ou 5, dans lequel une fenêtre de visualisation de fil (24A) qui est ouverte vers l'extérieur est formée pour pénétrer à travers la portion de connexion de fil de sorte qu'en visualisant un noyau à travers cette fenêtre de visualisation de fil (24A), il peut être confirmé que le fil (W) est inséré à une profondeur spécifiée dans la portion de connexion de fil (24).

7. Connecteur de chargement (10) selon l'une quelconque des revendications précédentes, dans lequel un espace libre (17B) est réglé entre la paroi périphérique de la portion de logement de borne (15, 29) entourant ou adjacente au premier orifice d'évacuation (25A) et la borne femelle (20).

8. Connecteur de chargement (10) selon l'une quelconque des revendications précédentes, dans lequel l'au moins un second orifice d'évacuation (29A) formé dans ou près d'une partie inférieure de la portion de logement de borne (29) et le ou les premiers orifices d'évacuation (25A) communiquent en étant partiellement chevauchés.

9. Connecteur de chargement (10) selon l'une quelconque des revendications précédentes, dans lequel l'au moins un second orifice d'évacuation (29B) formé dans ou près d'une partie inférieure de la portion de logement de borne (29) est formé pour avoir essentiellement le même diamètre que et pour être coaxial à un ou plusieurs premiers orifices d'évacuation (25A).
